# EUROPEAN PATENT SPECIFICATION

(11) **EP 1 663 644 B1**
(45) Date of publication and mention of the grant of the patent: **20.04.2011**
(21) Application number: 04789087.6
(22) Date of filing: 24.09.2004
(51) Int. Cl.: B32B 37/15, B32B 37/20, B32B 37/24, B32B 5/20, B32B 7/14

(54) **METHOD FOR PRODUCING AN EFFERVESCENT LAMINATE STRUCTURE**
VERFAHREN ZUR HERSTELLUNG EINER SCHÄUMENDEN LAMINATSTRUKTUR
PROCEDE PERMETTANT LA PRODUCTION D'UNE STRUCTURE STRATIFIEE EFFERVESCENTE

(30) Priority: 26.09.2003 US 506350 P
(43) Date of publication of application: 07.06.2006
(73) Proprietor: THE PROCTER & GAMBLE COMPANY, Cincinnati, OH 45202 (US)
(72) Inventor: HASENOEHRL, Erick, John, Loveland, Ohio 45140 (US); MEYERS, Gary, Earl, Cincinnati, Ohio 45212 (US); MCATEE, David, Michael, Mason, Ohio 45040 (US); CILLEY, Timothy, John Walter, Mason, Ohio 45040 (US)
(74) Representative: Kohol, Sonia
(86) International application number: PCT/US2004/031632
(87) International publication number: WO 2005/030485

(56) References cited:
- EP-A- 0 203 289
- DE-A1- 19 834 199
- US-A1- 2001 041 484
- US-A1- 2003 087 569
- US-B1- 6 491 928
- "HOT MELT FINDING FAVOUR OVER SOLVENT SYSTEMS" INTERNATIONAL DYER, TEXTILE BUSINESS PRESS LTD. LONDON, GB, vol. 183, no. 8, August 1998 (1998-08), page 31, XP000782849 ISSN: 0020-658X

## Description

### Field of the Invention

The present invention relates to methods for producing laminate structures, more particularly, to methods for producing laminate structures containing an effervescent composition in an intermediate layer of the laminate structure and to the laminate structures so produced. EP0203289 discloses a method to adhere two substrates using a hot-melt adhesive.

The laminate structure disclosed herein may be used as an intermediate product to be used in the manufacturing of a finished or final laminate article. In accordance with certain embodiments of the invention, the laminate structure is used to produce cleansing articles such as those described in copending and commonly assigned U.S. Application Ser. No. 10/645, 079, filed August 21,2003. Alternatively, the laminate structures may be suitable for use without additional processing. The laminate structures and laminate articles produced therefore can be used in various other applications including, without limitation, cleaning, disinfecting, etc. of surfaces. Surfaces include, but are not limited to, hard surfaces, such as ceramic tile, vinyl, linoleum, finished wood floors, laminates, and the like. The laminate structures and laminate articles produced therefrom can also be used for cleaning skin, hair, teeth, etc.

### Summary of the Invention

In accordance with one aspect of the invention, a method according to claim 1 for producing a laminate structure containing an effervescent composition is described.

### Brief Description of the Drawings

Further characteristics and advantages of the invention will become clear from the description which follows, given purely by way of non-limiting example, with reference to the appended drawings, in which:
FIG. 1 is a perspective view of a laminate structure formed according to the present invention, with one of the two layers partially raised,
FIG. 2 is a sectional view of the laminate structure taken on the line II--II of FIG. 1.
FIG. 3 is a perspective view of a continuous strip of the laminate structure of the present invention rolled in the form of a roll
FIG. 4 is a plan view of a continuous strip of an alternative configuration of the laminate structure, and
FIG. 5 is a schematic view of a device for producing a laminate structure according to the present invention.

### Detailed Description of the Invention

A laminate structure with an effervescent composition, such as a composition containing an alkaline material and acid material, located in an intermediate layer of a laminated structure sandwiched between first and second support layers exhibits improved stability of the effervescent composition. The combined alkaline and acid materials do not aggregate or cake, thereby providing even and sustained reactivity of the chemistry during use. When the term "upon the web" is used, it is meant that the designated material is either on some or the entire surface of the web and, or within the interstices of the web itself. The first and second layers of the structure of the present invention typically comprise woven, non-woven and, or combination of woven and non-woven webs. Synthetic film, tissue paper, air-laid paper and combinations thereof may also be used. The only requirement is that at least one of the layers of the laminate be water-permeable to the extent that sufficient water passes into the structure in order to activate the effervescing composition found within the laminate.

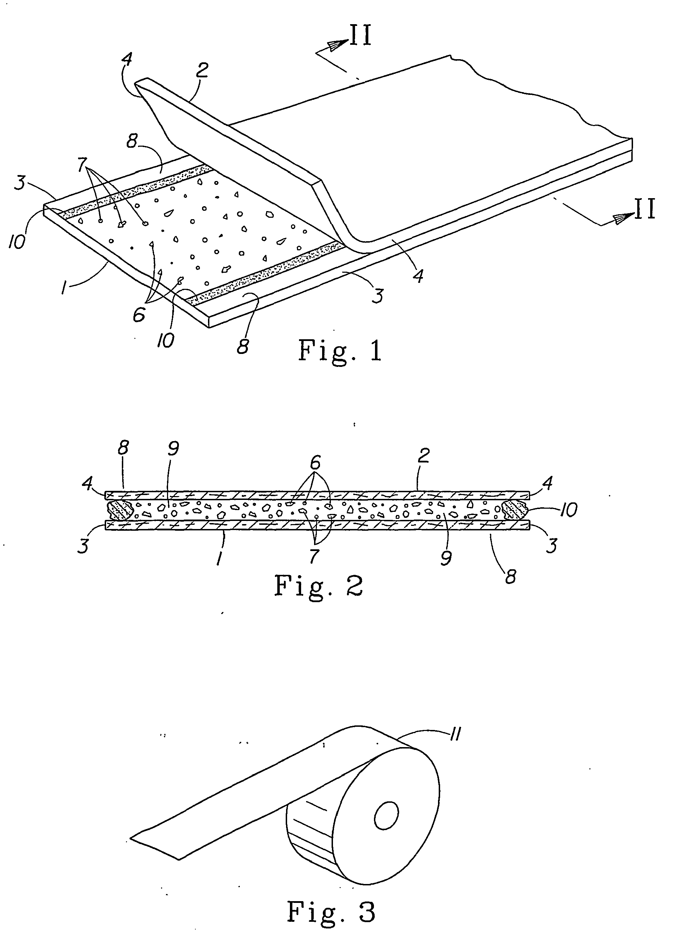

FIGS. 1 and 2 show a preferred configuration of a laminate structure formed according to the present invention. In FIG. 1 , one of the layers is partially raised to show its construction more clearly. In FIG. 1 it is possible to distinguish a first fibrous layer 1 and a second fibrous layer 2 in the form of two continuous strips of the same width, which are superposed so that their respective longitudinal edges 3 and 4 coincide; the fibrous layers may be made of various materials such as, for example, paper, wadding, or non-woven fabric; they are preferably made of air laid or spunbond fibers having a basis weight of between 15 g/m² and 150 g/m². Films can also be used and typically will have a basis weight of between 1 g/m² and 100 g/m².

Between the two fibrous layers 1 and 2 there is an intermediate layer 5 made of a mixture of particles of effervescent material 6 and particles of a bonding agent 7; the width of the intermediate layer 5 is less than the widths of the two outer fibrous layers 1 and 2 which extend beyond the intermediate layer 5 laterally forming two longitudinal edge portions 8 at their respective longitudinal edges 3 and 4.

The two outer fibrous layers 1 and 2 are bonded together in the central region in which the intermediate layer 5 is present by the application of heat and moderate pressure to melt the particles 7 of bonding agent present in the intermediate layer 5, mixed with the particles 6 of effervescent material. As can best be seen in FIG. 2, which is a section of the laminate structure taken on the line II-II of FIG. 1, the bond between the fibrous layers 1 and 2 is formed at discrete spaced-apart points 9 generated by the melting of the individual particles 7 of hot melting, polymeric, organic material; as it melts, the polymeric material bonds the fibers of the two adjacent layers 1 and 2 together.

In practice, the particles 6 of effervescent material are affected only to a very marginal extent by the melting of the particles of bonding agent 7, and thus remain trapped between the two fibrous layers, being only minimally affected by the presence of any other materials directly in contact with them.

In accordance with one embodiment, two or more continuous lines 10 of adhesive may also be applied to the two sides of the intermediate layer 5 on the longitudinal edge regions 8 of the two outer fibrous layers 1 and 2 so as to reinforce the connection between the fibrous layers themselves and improve downstream processing.

The average dimensions of the particles 6, given as a weighted average of the smallest dimensions of the individual particles, may be between 10 microns and 1000 microns more particularly between about 20 microns and 500 microns and in certain embodiments between about 40 microns and 100 microns.

The quantity of the effervescent material 6 distributed to form the intermediate layer 5, together with the bonding agent 7, may be between 50 g/m² and 600 g/m² and more particularly, between about 300 g/m² and 500 g/m²

The finely-divided bonding agent has the purpose of bonding the two fibrous layers 1 and 2 together by melting and may form discrete, spaced-apart bond points 9 between the fibers of the two layers. For this purpose, the quantity of bonding agent distributed and mixed with the effervescent material typically is between about 5% and 30%, more particularly, between about 10% and 20%, by weight based on the weight of the effervescent composition. Accordingly, the bonding agent will typically be present in an amount of from about 10 g/m² to about 120 g/m².

The bonding agent can preferably be melted at a temperature such as not to interfere with the characteristics of the other components of the layered structure, particularly the fibrous layers and the effervescent material; moreover, it must have fluidity characteristics such as to enable the bond between the fibers to be formed rapidly; in other words, when it melts, the individual particle of thermoplastic polymeric organic material is interpenetrated by fibers belonging to both the fibrous layers and when it subsequently sets, it forms a bond between the two layers 1 and 2.

It has been found that these preferred characteristics can be achieved by a bonding agent 7 having a melt flow index (M.F.I.), evaluated by the ASTM method D 1238-85 under conditions 190/2.16, of at least 25 g/10 min., preferably at least 40 g/10 min, and even more preferably at least 60 g/10 min.

If the layers 1 and 2 are made of an air-laid short cellulose fiber material, it has been found particularly preferable to use a bonding agent composed of particles of high-density polyethylene with maximum dimensions of about 400 microns, characterized by a melt flow index of about 50 g/10 min., of which the quantity distributed is between 5 g/m² and 15 g/m².

Surprisingly, it has been found that the apparent contradiction due to the incompatibility of polyethylene, which is typically hydrophobic, and cellulose fibers is in fact translated into an advantage; in fact, it may be assumed that, during the heating of the structure, the melted polyethylene particles can rapidly incorporate the cellulose fibers belonging to the two adjacent layers by virtue of the desired characteristics expressed in terms of the melt flow index, but does not interpenetrate the fibrous mass further, and thus creates discrete and well-defined bond points between the layers, any effect of the polyethylene on the characteristics of the structure in terms, for example, of its absorption capacity, being limited to a maximum extent.

The laminate structure of the present invention may also be formed from two different fibrous layers or may comprise more than two fibrous layers, and consequently more than one intermediate layer formed by the mixture of particles of effervescent material and particles of bonding agent.

In any case, by virtue also of the continuous lines of adhesive disposed between the fibrous layers on the respective longitudinal edge portions, the structure has the further advantage that it can be produced separately and stored as it is, for example, as a continuous strip rolled in the form of a roll 11, shown in FIG. 3, which can subsequently be used on the production line for laminated articles, for example, cleansing articles, which incorporate the structure as a gas generating element. In an alternative embodiment, the strip can be "festooned" instead of rolled.

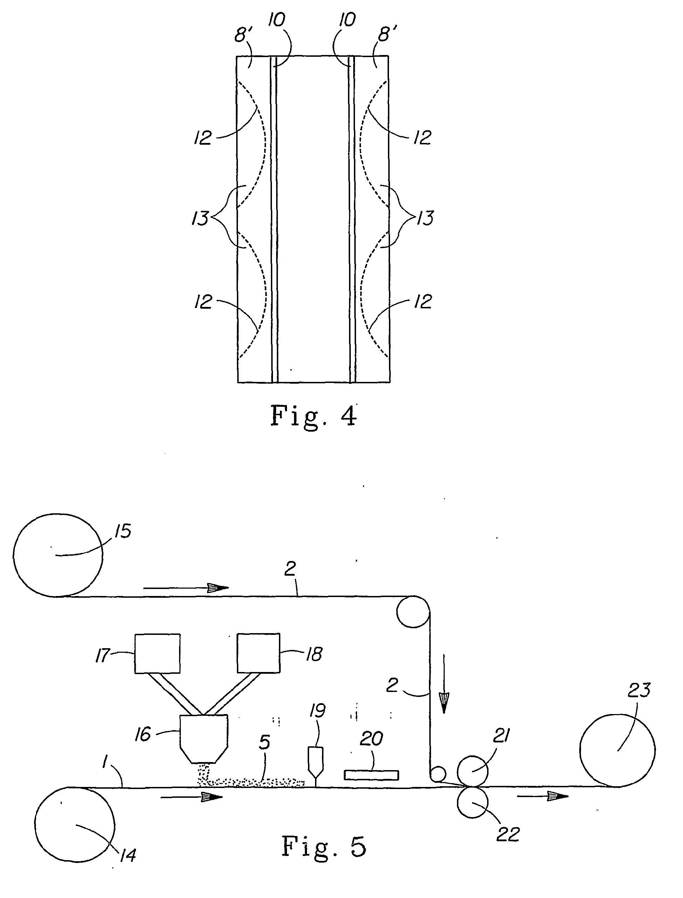

In an alternative configuration, shown in FIG. 4, the laminate structure of the present invention comprises longitudinal edge portions 8' which are particularly wide and extend laterally beyond the continuous lines of adhesive 10; the laminate structure can thus be incorporated in a shaped laminate article and can be shaped itself, for example, along cutting lines indicated 12, without involving the need to discard the material constituting the intermediate layer along with the scraps 13 formed from the superposed fibrous layers.

FIG. 5 is a simplified diagram of a method of producing a laminate structure according to the present invention.

The reels 14, 15 supply the first and second fibrous layers 1 and 2, which may be of the same material or of different materials, in the form of respective continuous strips; the mixer/dispenser 16, which is supplied by the container 17 of effervescent material and by the container 18 of bonding agent, forms the intermediate layer 5 on the surface of the first fibrous layer 1; the two extruders 19, only one of which is visible in FIG. 5, then form the two continuous lines 10 of adhesive, for example, of the hot melting type, at the two sides of the intermediate layer 5 and on the longitudinal edge portions of the first fibrous layer 1.

The first fibrous layer 1 and the intermediate layer 5 are heated to melt the particles of bonding agent 7, for example, by means of a radiant heating element 20; the second fibrous layer 2 is then superposed on the first fibrous layer 1 and on the intermediate layer 5 and the three layers, combined to form the structure, are bonded by subjecting the structure to moderate pressure by passing it between the two rollers 21 and 22 bringing about the adhesion of the two fibrous layers 1 and 2 by means of the melted particles of bonding agent 7 and the two continuous lines of adhesive 10. The outer surface of at least one of the two rollers 21 and 22 is preferably made resilient by being covered with a layer, for example, of silicone rubber.

Finally, the laminate structure is collected on the reel 23 in the form of a continuous strip.

Substrates useful in forming the first and second layers may comprise a variety of both natural and synthetic fibers or materials. As used herein, "natural fibers" are those derived from plants, animals, insects or byproducts of plants, animals, and insects. The conventional base starting material is usually a fibrous web comprising any of the common synthetic or natural textile-length fibers, or combinations thereof.

Nonlimiting examples of natural materials useful in the present invention include, but are not limited to, silk fibers, keratin fibers and cellulosic fibers. Nonlimiting examples of keratin fibers include those selected from the group consisting of wool fibers, camel hair fibers, and the like. Nonlimiting examples of cellulosic fibers include those selected from the group consisting of wood pulp fibers, cotton fibers, hemp fibers, jute fibers, flax fibers, and combinations thereof. Cellulosic fiber materials are preferred in the present invention. Nonlimiting examples of synthetic materials useful in the present invention include those selected from the group consisting of acetate fibers, acrylic fibers, cellulose ester fibers, modacrylic fibers, polyamide fibers, polyester fibers, polyolefin fibers, polyvinyl alcohol fibers, rayon fibers, polyethylene, polypropylene, bicomponent fibers, formed films, films, and combinations thereof. Examples of suitable synthetic materials include acrylics such as acrilan, creslan, and the acrylonitrile-based fiber, orlon; cellulose ester fibers such as cellulose acetate, arnel, and acele; polyamides such as nylons (e.g., nylon 6, nylon 66, nylon 610, and the like); polyesters such as fortrel, kodel, and the polyethylene terephthalate fiber, polybutylene terephthalate fiber, dacron; polyolefins such as polypropylene, polyethylene; polyvinyl acetate fibers; polyurethane foams and combinations thereof. These and other suitable fibers and the nonwovens prepared there from are generally described in Riedel, "Nonwoven Bonding Methods and Materials," Nonwoven World (1987); The Encyclopedia Americana, vol. 11, pp. 147-153, and vol. 26, pp. 566-581 (1984); U. S. Patent No. 4,891,227, to Thaman et al., issued January 2, 1990; and U. S. Patent No. 4,891,228. As used herein, "nonwoven" means that the layer comprises fibers which are not woven into a fabric but rather are formed into a sheet, mat, or pad layer. The fibers can either be random (i.e., randomly aligned) or they can be carded (i.e., combed to be oriented in primarily one direction). Nonwoven substrates made from synthetic materials useful in the present invention can be obtained from a wide variety of commercial sources.

More preferred synthetic fibers for the sheet layer are solid staple polyester fibers, which comprise polyethylene terephthalate homopolymers. Suitable synthetic materials may include solid single component and multicomponent synthetic fibers, i.e., more than one type of material making up the fibers. The synthetic fibers may comprise bicomponent or dual component fibers. Such bicomponent fibers may have a core and a sheath configuration or a side-by-side configuration. In either instance, the sheet layer may comprise either a combination of fibers comprising the above-listed materials or fibers which themselves comprise a combination of the above-listed materials.

In any instance, side-by side configuration or core-sheath configuration, the fibers of the sheet layer may exhibit a helical or spiral configuration, particularly the bicomponent type fibers.

A preferred synthetic material for a scouring sheet layer may comprise nylon fibers. A more preferred synthetic material comprises nylon fibers formed into a scrim layer having additional nylon fibers bonded thereto such that the additional fibers form arcs on the scrim layer.

Natural material nonwovens useful in the present invention may be obtained from a wide variety of commercial sources. Nonlimiting examples of suitable commercially available paper layers useful herein include Airtex®, an embossed airlaid cellulosic layer having a base weight of about 71 gsy, available from James River, Green Bay, WI; and Walkisoft®, an embossed airlaid cellulosic having a base weight of about 75 gsy, available from Walkisoft U.S.A., Mount Holly, NC.

Additional suitable nonwoven materials include, but are not limited to, those disclosed in U. S. Patent Nos. 4,447,294, issued to Osborn on May 8, 1984; 4,603,176 issued to Bjorkquist on July 29, 1986; 4,981,557 issued to Bjorkquist on January 1, 1991; 5,085,736 issued to Bjorkquist on February 4, 1992; 5,138,002 issued to Bjorkquist on August 8, 1992; 5,262,007 issued to Phan et al. on November 16, 1993; 5,264,082, issued to Phan et al. on November 23, 1993; 4,637,859 issued to Trokhan on January 20, 1987; 4,529,480, issued to Trokhan on July 16, 1985; 4,687,153 issued to McNeil on August 18, 1987; 5,223,096, issued to Phan et al. on June 29, 1993 and 5,679,222, issued to Rasch et al. on October 21, 1997.

Additional suitable materials include but are not limited to, formed films and composite materials, i.e., multiply materials containing formed films. Alternatively, such formed films comprise plastics which tend to be soft to the skin. Suitable soft plastic formed films include, but are not limited to, polyolefins such as low density polyethylenes (LDPE).

Methods of making nonwovens are well known in the art. Generally, these nonwovens can be made by air-laying, water-laying, meltblowing, coforming, spunbonding, or carding processes in which the fibers or filaments are first cut to desired lengths from long strands, passed into a water or air stream, and then deposited onto a screen through which the fiber-laden air or water is passed. The resulting layer, regardless of its method of production or composition, is then subjected to at least one of several types of bonding operations to anchor the individual fibers together to form a self-sustaining web. In the present invention the nonwoven layer can be prepared by a variety of processes including, but not limited to, meltblowing, spunbonding, air-entanglement, hydroentanglement, thermal bonding, and combinations of these processes.

The intermediate layer of the laminate of the present structure contains the effervescent composition. This composition is applied to portions of or the entire surface of the first layer. By placing the effervescing composition in the intermediate layer between the first and second layers, the effervescent composition does not agglomerate and/or cake, thereby remaining evenly spread over the first layer surface throughout the laminate thereby facilitating consistent and steady activity of the structure or finished article when wetted.

In accordance with one embodiment of the present invention, the process for forming the intermediate layer involves feeding the effervescent composition onto the first layer from a depositing station that comprises one or more dispensers or hoppers that feed the effervescent materials individually or the composition as a whole onto the first layer. Upon deposition onto the web surface, the effervescent composition adheres to the web using any number of means including a bonding agent either applied to the web prior to or along with the effervescent composition. Bonding agents useful in the manufacture of the intermediate layer include, but are not limited to thermoplastic polymers including polypropylene, polyethylene, ethylene vinyl acetate or other synthetic or natural bonding agent. The amount of the bonding agent is from 5% to 30% by weight of the effervescent composition. The blending of the effervescent materials forming the composition and bonding agent takes place in a mixer fed by suitable flow rates of the substances through tubes wherein the mixer in turn feeds into a dispenser tube.

After passing through a means for activating the bonding agent, such as a heating device, the web can have a second web applied over the top of the first web. The first web has an adhesive applied to it wherein a second web is applied over the first web. After passing through a series of rollers, additional webs with or without the effervescent composition are laminated into the second layer in the manner previously disclosed. Although not necessary, the effervescent composition may also be applied at the contracting surfaces between the first and the second layers forming the laminate.

### Effervescent Compositions

The effervescent composition of the present can include acidic materials. Suitable for this purpose are any acids present in dry solid form. Especially appropriate are C2 to C20 organic mono-and poly-carboxylic acids and especially alpha-and beta-hydroxycarboxylic acids; C2 to C20 organophosphorus acids such as phytic acid; C2 to C20 organosulfur acids such as toluene sulfonic acid; and peroxides such as hydrogen peroxide. Typical hydroxycarboxylic acids include adipic, glutaric, succinic, tartaric, malic, maleic, lactic, salicylic and citric acids as well as acid forming lactones such as gluconolactone and glucarolactone. Most preferred is citric acid. Also suitable as acid material may be encapsulated acids. Typical encapsulating material may include water-soluble synthetic or natural polymers such as polyacrylates (e. g. encapsulating polyacrylic acid), cellulosic gums, polyurethane and polyoxyalkylene polymers. By the term"acid"is meant any substance which when dissolved in deionized water at 1% concentration will have a pH, of less than 7, alternatively less than 6.5, optimally less than 5. These acids alternatively at 25 C are in solid form, i. e. having melting points no less than 25 C. Preferably the total particle size of the acid material will be about 300 mesh, more preferably at least about 550, even more preferably at least about 650. Particle size can be determined by the ASTM method D1895. Concentrations of the acid should range from about 0.5% to about 80%, alternatively from about 10% to about 65%, and finally from about 20% to about 45% by weight of the total composition.

Additionally, the effervescent compositions of the present can include alkaline materials. The alkaline materials are substances that can generate a gas such as carbon dioxide, nitrogen or oxygen, i. e. effervesce, when contacted with water and the acidic material. Suitable alkaline materials are selected from the group consisting of anhydrous salts of carbonates and bicarbonates, alkaline peroxides (e.g. sodium perborate and sodium percarbonate) and azides (e.g. sodium azide) and mixtures thereof. Alternatively, the alkaline materials are sodium or potassium bicarbonate. In a preferred embodiment, the alkaline material is sodium bicarbonate. Preferably the total particle size of the alkaline material will be less than about 500 mesh, more preferably less than about 300 mesh, even more preferably less than about 250 mesh. Particle size can be determined by the ASTM method D1895. Amounts of the alkaline materials may range from about 1% to about 80%, alternatively from about 5% to about 49%, alternatively from about 15% to about 40%, and finally from about 25% to about 35% by weight of the total composition.

By the term "anhydrous" is meant the presence of no more than 5%, alternatively no more than 3.5% and optimally no more than 1% water by weight of the total composition. Water of hydration is not considered to be water for purposes of the anhydrous definition. However, it is preferred to minimize, alternatively to eliminate any water of hydration.

Advantageously the combined amount of acidic and alkaline materials will be at least about 1.5%, alternatively from about 40% to about 100%, and finally from about 60% to about 80% by weight of the total composition. The ratio of the acidic material to the alkaline material is from about 20:70 to about 70:20, preferably 30:60 to about 60:30, more preferably about 40:50 to about 50:40, even more preferably from about 50:50. The composition may also include other powdered components.

The preferred pH range of the of the total composition is from about 2.5 to about 9.0, preferably from about 4 to about 8.5, more preferably from about 6.0 to about 8.0, even more preferably from about 6.5 to about 7.5, still even more preferably about 7.0. To obtain the pH of the total composition a Thermo Orion 520A pH meter with a flat-probe (model number 913600) combination pH surface electrode is used. The laminate structure of the present invention is exposed to warm water for 5 seconds. The laminate structure is then squeezed to form a lather. The pH is measured using the pH meter and probe as previously described at the laminate structure surface at 20 seconds and 40 seconds. Results are recorded.

Alternatively, other solid components such as dry, powdered surfactants may be used in place of the effervescent composition or optionally in combination with the effervescent composition. Furthermore, surfactants may be located at the surfaces of at least a first layer and other designated layers of the laminate for optimizing the lathering of the article to provide improved cleansing benefits. Generally, the articles will comprise powdered surfactants at a level less than about 1 gm, by weight of the laminate article, preferably less than about 0.75 gm, even more preferably less than about 0.5 gm, and still even more preferably less than about 0.35 gm, by weight of the laminate article. Non-lathering and Lathering Surfactants, such as those described in copending U.S. Application Ser. No. 10/645,079 may be useful. A wide variety of lathering surfactants are useful herein and include those selected from the group consisting of anionic lathering surfactants, nonionic lather surfactants, amphoteric lathering surfactants, and mixtures thereof. When lathering surfactants are used with or without the effervescent composition the laminate structure is capable of generating an Average Lather Volume as determined by the Lather Volume Test described hereafter.

### Film Formed Materials

Formed films may be used as one of the first or second layers or as an additional layer of the laminate structure of the present invention. The film formed may provide the article with a laminate that has rigidity, to prevent balling up of the article when being wiped over the surface of the body. This is particularly helpful for larger surface area sheets such as those typically found in body wash articles as described in U.S. Patent No. 6,491,928, Smith et al, issued 12/10/02. The formed films also assist in constructing a spot fused texture over the planar surface of the article, reminiscent of a quilted mattress. Such a pattern again assists in maintaining in use rigidity and also equal distribution of any lose dry, granular materials that may be distributed between the layers of the laminate. Formed films include, but are not limited to polymer films such as polyolefins including polyethylene.

As previously discussed, the laminate must have at least a layer that is water permeable. Thus, the formed films may also be water-permeable. One such way to insure permeability is to create apertured formed films. Apertured formed films may be apertured, microapertured, macroapertured and combinations thereof. On the other hand, "macroapertured", as used herein refers to a layer containing well-defined apertures having an average diameter of greater than about 300 microns. As used herein, "microapertured" generally refers to layers containing well-defined microscopic apertures (i.e., those not readily visible to the naked eye having 20/20 vision). Preferably, the microapertures are characterized by the presence of petal-like edged surface aberrations on at least one surface of the layer which add a three dimensional character to the layer. Preferably, the microapertures are characterized by the presence of petal-like edged surface aberrations on at least one surface of the layer such that the layer has a three dimensional character and such that fluid flow is facilitated from one surface of the layer to another surface of the layer. Suitable microapertured materials useful for the first layer of the present invention include, but are not limited to, those disclosed in co-pending application U.S. Ser. No. 08/326,571 and PCT Application No. US95/07435, filed Jun. 12, 1995, and published Jan. 11, 1996, and U.S. Pat. No. 4,629,643, issued Dec. 16, 1986 to Curro et al.

### Lather Volume Test

The laminate structure of the present invention can comprise enough of a lathering surfactant such that the structure is capable of generating greater than or equal to about 25 ml, more preferably greater than or equal to about 30 ml, more preferably greater than or equal to about 50 ml, even more preferably greater than or equal to about 75 ml of Average Lather Volume, still more preferably greater than or equal to about 100 ml of Average Lather Volume, still even more preferably greater than or equal to about 150 ml of Average Lather Volume. The Average Lather Volume generated by the laminate article will be the same if the lathering surfactant is present on the laminate structure with or without the effervescent material. The Average Lather Volume is a measurement determined by the Lather Volume Test This test provides a consistent measurement of the volume of lather/foam generated by the laminates described herein. The Lather Volume Test protocol is described as follows:
(1) Hands are washed with Ivory bar before conducting the test This step removes any soils which may affect the accuracy of the measurement.
(2) The test article is held open the non-dominant hand with the edges turned up.
(3) 10 ml of water (medium hardness of 137 ng/litre to 171 ng/litre [8-10 grains per gallon]) at 95°C is added onto the test article via a 10 nl syringe or a Brinkmann repipetter.
(4) The lather is then generated by rubbing the test article with the dominant hand in a circular motion between the palms for 6 seconds (-2 rotations per second), using moderate pressure (e.g. 0.11 kg [4 oz.]), and allowing the article to ball-up between the palms of the hand.
(5) The test article is then held open in the non-dominant hand and an additional 10 ml of water (medium hardness of 137 ng/litre to 171 ng/litre [8-10 grains per gallon]) 95C is added onto the test article via a 10 nl syringe or a Brinkmann repipetter. The wetted article is again rubbed with the dominant had (3 rotations) using moderate force (e.g. 011 kg [4 oz.]) so that the test article becomes balled-up between the palms.
(6) The test article is then opened and rubbed 5 times by holding one edge of the article in one hand and rotating the hand holding the other side to further activate lather.
(7) The test article is then flipped over and Step #6 is repeated using the other hand.
(8) The lather is gathered by holding the test article in a cupped hand and scraping the lather off the test article with the other hand, being careful to only scrape lather from the test article. The lather from the test article is placed into a graduated cylinder or beaker big enough to hold the generated lather. This procedure is repeated 5 times on the same test article, and the lather from each iteration is accumulated in the same graduated cylinder or beaker. The total accumulated lather from these iterations is designated as the Lather Volume.
(9) To achieve consistent results, the Average Lather Volume is reported as the average of three test sample replications of Steps 1-8.

Naturally, the principle of the invention remaining the same, the details of construction may be varied widely from those described and illustrated without thereby departing from the scope of the present invention. In particular, there may be more than two layers of fibrous material thus forming several pairs of fibrous layers each enclosing an intermediate layer comprising a mixture of effervescent material and thermoplastic material for joining the fibrous layers together in the manner described above. Furthermore, as discussed above, one or more of the layers may be non-fibrous.

Except in the operating and comparative examples, or where otherwise explicitly indicated, all numbers in this description indicating amounts of material are to be understood as modified by the word "about".

The term "comprising" is meant not to be limiting to any subsequently stated elements but rather to encompass non-specified elements of major or minor functional importance. In other words the listed steps, elements or options need not be exhaustive.

All measurements referred to herein are made at 25°C unless otherwise specified.

The following example will more fully illustrate an embodiment of this invention. All parts, percentages and proportions referred to herein and in the appended claims are by weight unless otherwise indicated.

### Example 1:

| Ingredient | Weight % |
|---|---|
| Sodium Bicarbonate | 50.33 |
| Citric Acid | 41.16 |
| Bonding Agent | |
| Polyethylene | 20% Effervescent material |
| Substrate layers | |
| Substrate 1: 100% PP spunbond | 30gsm |
| Substrate 2: Airlaid 85% cellulose/15% PE/PP | 50gsm |
| Bico | |

A laminated structure in accordance with one aspect of the present invention is made using materials as found in the table above. The ingredients are dry blended in an auger and deposited on the surface of the first layer at a rate of 390 g/m². A bonding agent (Polyethylene) is also dry blended into the above mixture at a rate of 20%. After deposition on the substrate the resultant nonwoven, and powders are heated in an oven to melt the bonding agent Subsequently, a second layer is placed on top of the said first layer and powder mixture. All three layers are combined with a "nip".

| Ingredient | | | | |
|---|---|---|---|---|
| *effervescent composition* | Ex. 2 | Ex. 3 | Ex. 4 | Ex. 5 |
| Sodium Bicarbonate | | | | |
| Ratio | 50% | 58% | 58% | 58% |
| Weight | 200 gsm | 170 gsm | 170 gsm | 110 gsm |
| Particle Size | 300 | 300 | 210 | 210 |
| Citric Acid | | | | |
| Ratio | 40% | 32% | 32% | 32% |
| Weight | 160 gsm | 93 gsm | 93 gsm | 62 gsm |
| Particle Size | 300 | 700 | 700 | 700 |
| *Bonding Agent* | | | | |
| Polyethylene Ratio | 10% | 10% | 10% | 10% |
| *Substrate layers* | | | | |
| Substrate 1: 100% PP spunbond | 30gsm | 30gsm | 30gsm | 30gsm |
| Substrate 2: Airlaid 85% cellulose/15% PPJPP Bico | 50gsm | 50gsm | 50gsm | 50gsm |
| *surfactant* | 0.35 g | 0.35 g | 0.35 g | 0.35 g |
| Average Lather Volume | 25mL | 45mL | 60 mL | 100mL |
| pH | 2.9 | 4.5 | 5.9 | 7 |

A laminated structure in accordance with one aspect of the present invention is made using materials as found in the table above wherein 'gsm' is grams per square metre or g/m². The ingredients are dry blended in an auger and deposited on the surface of the first layer at a rate of 390 g/m². A bonding agent (polyethylene) is also dry blended into the above mixture at a rate of 10%. After deposition on the substrate the resultant nonwoven, and powders are heated in an oven to melt the bonding agent Subsequently, a second layer is placed on top of the said first layer and powder mixture. All three layers are combined with a "nip".

## Claims

1. A method for producing a laminate structure comprising:
a) providing a first layer (1) comprising a substrate
b) forming an intermediate layer (5) on said first layer (1) and
c) applying a second layer (2) onto said intermediate layer (5) to form a multilayered structure;
bonding said multilayered structure to produce a laminate structure comprising the first layer bonded to the second layer with the intermediate layer disposed therebetween, wherein at least one of the first and second layers is permeable to liquids;
**characterised in that** said intermediate layer comprises an effervescent composition (6) and a bonding agent (7), said bonding agent being present in an amount between 5 and 30% by weight of the effervescent composition.

2. A method according to claim 1, wherein the effervescent composition (6) has a pH from 2.5 to 9.0, preferably the effervescent composition comprises from 1 to 80% of an alkaline material and from 0.5% to 80% of an acidic material based on the total weight of the effervescent composition, more preferably wherein the ratio of said acidic material to said alkaline material is from 20: 70 to 70: 20.

3. A method according to any one of the preceding claims, wherein the effervescent composition (6) comprises solid alkaline and acidic materials, preferably the alkaline material is selected from the group consisting of anhydrous salts of carbonates and bicarbonates: alkaline peroxides and azides and mixtures thereof, more preferably the alkaline material is selected from the group consisting of sodium bicarbonate, potassium bicarbonate, sodium carbonate, potassium carbonate and mixtures thereof, even more preferably the acidic material is selected from the group consisting of C₂ to C₂₀ organic mono-and poly-carboxylic acids; C₂ to C₂₀ organophosphorus acids; C₂ to C₂₀ organosulfur acids, toluene sulfonic acid: peroxides, lactones and mixtures thereof, and still even more preferably the acidic material is selected from the group consisting of adipic, glutaric, succinic, tartaric, malic, maleic, lactic, salicylic, citric acids and mixtures thereof.

4. A method according to any one of the preceding claims, wherein said alkaline material has a total particle size of less than 500 mesh.

5. A method according to any one of the preceding claims, wherein said acid material has a total particle size of 300 mesh.

6. A method according to claim 1, wherein said laminate structure optionally comprises a powdered surfactant.

7. A method according to claim 6, wherein said structure generates greater than or equal to 25 ml Average Lather Volume.

8. A method according to claim 1, wherein the first (I) and second (2) layers extend beyond the intermediate layer (5) laterally forming longitudinal edge portions (8, 8') and the method further comprises the step of (d) applying longitudinal lines (10) of adhesive material to the longitudinal edge portions (8, 8') of the first layer and bonding together the first and second layers along each of the edge portions.

9. A method according to claim 1. wherein the first (1) and second (2) layers are the same or different and each of the first and second layers independently comprises a material selected from the group consisting of woven fabric, non-woven fabric, synthetic film, tissue paper and combinations thereof; and wherein the material has a basis weight of between 1g/m² and 150g/m².

10. A method according to claims 1 and 8, wherein the intermediate layer (5) is formed on the first layer at a coat weight of from 50 g/m² to 600g/m², preferably wherein the intermediate layer is formed on the first layer at a coat weight of from 300 g/m² to 500 g/m².

11. A method according to claim 1, wherein the bonding agent (7) is selected from the group consisting of polypropylene, polyethylene, ethylene vinyl acetate and mixtures thereof, preferably wherein the bonding agent is present in an amount of from 10g/m² to 120glm², more preferably wherein the bonding agent has a melt flow index (M.F.I.) of at least 25g/10 min.

12. A method according to claims 1, 8 and 10, wherein the intermediate layer (5) is formed by depositing a blend of the effervescent composition (to) and the bonding agent (7) on the first layer (1).

13. A method according to claims 1, 8 and 10, wherein the intermediate layer (5) is formed by separately depositing the effervescent composition (6) and the bonding agent (7) on the first layer (1).

14. A method according to claim 8, wherein said method further comprises:
c) longitudinally slitting said laminate structure to produce narrow webs; and
f.) winding the narrow webs into rolls (11).

15. A laminate article comprising a laminate structure **characterised in that** it is produced in accordance with the method of claim 1, preferably in the form of an article for cleaning surfaces wherein the surfaces arc selected from the group consisting of skin, hair, teeth, counters, sinks, tubs, fixtures, toilet bowls, and combinations thereof.

## Patentansprüche

1. Verfahren zur Herstellung einer Laminatstruktur, umfassend:
a) Bereitstellen einer ersten Schicht (1), die ein Substrat umfasst
b) Ausbilden einer Zwischenschicht (5) auf der ersten Schicht (1) und
c) Aufbringen einer zweiten Schicht (2) auf der Zwischenschicht (5), um eine Mehrschichtstruktur auszubilden;
wobei die Mehrschichtstruktur aneinandergebunden wird, um eine Laminatstruktur zu erzeugen, welche die erste Schicht umfasst, die an die zweite Schicht gebunden ist, wobei die Zwischenschicht dazwischen angeordnet ist, wobei die erste und/oder die zweite Schicht flüssigkeitsdurchlässig ist bzw. sind;
**dadurch gekennzeichnet, dass** die Zwischenschicht eine schäumende Zusammensetzung (6) und einen Haftvermittler (7) umfasst, wobei der Haftvermittler in einer Menge zwischen 5 und 30 Gew.-% der schäumenden Zusammensetzung vorhanden ist.

2. Verfahren nach Anspruch 1, wobei die schäumende Zusammensetzung (6) einen pH-Wert von 2,5 bis 9,0 aufweist, die schäumende Zusammensetzung, bezogen auf das Gesamtgewicht der schäumenden Zusammensetzung, vorzugsweise 1% bis 80% alkalisches Material und 0,5% bis 80% saures Material umfasst, wobei noch bevorzugter das Verhältnis des sauren Materials zum alkalischen Material bei 20:70 bis 70:20 liegt.

3. Verfahren nach einem der vorstehenden Ansprüche, wobei die schäumende Zusammensetzung (6) feste alkalische und saure Materialien umfasst, wobei das alkalische Material vorzugsweise ausgewählt ist aus der Gruppe bestehend aus wasserfreien Salzen von Carbonaten und Bicarbonaten; alkalischen Peroxiden und Aziden und deren Mischungen, stärker bevorzugt das alkalische Material ausgewählt ist aus der Gruppe bestehend aus Natriumbicarbonat, Kaliumbicarbonat, Natriumcarbonat, Kaliumcarbonat und deren Mischungen, noch stärker bevorzugt das saure Material ausgewählt ist aus der Gruppe bestehend aus organischen C₂- bis C₂₀-Mono- und Polycarbonsäuren; C₂- bis C₂₀-Organophosphorsäuren; C₂- bis C₂₀-Organoschwefelsäuren, Toluolsulfonsäure; Peroxiden, Lactonen und deren Mischungen, und noch stärker bevorzugt das saure Material ausgewählt ist aus der Gruppe bestehend aus Adipin-, Glutar-, Bernstein- Wein-, Äpfel-, Malein-, Milch-, Salicyn-, Citronensäuren und deren Mischungen.

4. Verfahren nach einem der vorstehenden Ansprüche, wobei das alkalische Material eine gesamte Teilchengröße von weniger als 500 Mesh aufweist.

5. Verfahren nach einem der vorstehenden Ansprüche, wobei das saure Material eine gesamte Teilchengröße von 300 Mesh aufweist.

6. Verfahren nach Anspruch 1, wobei die Laminatstruktur optional pulverisiertes Tensid umfasst.

7. Verfahren nach Anspruch 6, wobei die Struktur höchstens 25 ml durchschnittliches Schaumvolumen erzeugt

8. Verfahren nach Anspruch 1, wobei die erste (1) und die zweite (2) Schicht sich über die Zwischenschicht (5) hinaus erstrecken und dabei Längsrandabschnitte (8, 8') bilden, und wobei das Verfahren ferner den Schritt (d) des Aufbringens von Längslinien (10) aus Klebstoff auf die Längsrandabschnitte (8, 8') der ersten Schicht und des Aneinanderbindens der ersten und der zweiten Schicht entlang jedes Randabschnitts umfasst.

9. Verfahren nach Anspruch 1, wobei die erste (1) und die zweite (2) Schicht gleich oder verschieden sind, und wobei sowohl die erste als auch die zweite Schicht unabhängig voneinander ein Material umfassen, das ausgewählt ist aus der Gruppe bestehend aus Gewebe, Vlies, Kunststofffolie, Seidenpapier und Kombinationen davon; und wobei das Material ein Grundgewicht zwischen 1 g/m² und 150 g/m² aufweist.

10. Verfahren nach einem der Ansprüche 1 und 8, wobei die Zwischenschicht (5) auf der ersten Schicht mit einem Beschichtungsgewicht von 50 g/m² bis 600 g/m² ausgebildet wird, wobei die Zwischenschicht vorzugsweise mit einem Beschichtungsgewicht von 300 g/m² bis 500 g/m² auf der ersten Schicht ausgebildet wird.

11. Verfahren nach Anspruch 1, wobei der Haftvermittler (7) ausgewählt ist aus Polypropylen, Polyethylen, Ethylenvinylacetat und Mischungen davon, wobei der Haftvermittler vorzugsweise in einer Menge von 10 g/m² bis 120 g/m² vorhanden ist, wobei der Haftvermittler noch stärker bevorzugt einen Schmelzflussindex (MFI) von mindestens 25 g/10 min aufweist.

12. Verfahren nach Anspruch 1, 8 oder 10, wobei die Zwischenschicht (5) durch Aufbringen einer Mischung aus der schäumenden Zusammensetzung (6) und dem Haftvermittler (7) auf der ersten Schicht (1) ausgebildet wird.

13. Verfahren nach einem der Ansprüche 1, 8 und 10, wobei die Zwischenschicht (5) durch separates Aufbringen der schäumenden Zusammensetzung (6) und des Haftvermittlers (7) auf die erste Schicht (1) ausgebildet wird.

14. Verfahren nach Anspruch 8, wobei das Verfahren ferner umfasst:
e.) Schlitzen der Laminatstruktur in Längsrichtung, um schmale Bahnen zu erzeugen; und
f.) Aufwickeln der schmalen Bahnen zu Rollen (11).

15. Laminatartikel, der eine Laminatstruktur umfasst, die **dadurch gekennzeichnet ist, dass** sie gemäß dem Verfahren von Anspruch 1 erzeugt wird, vorzugsweise in Form eines Artikels zum Reinigen von Oberflächen, wobei die Oberflächen ausgewählt sind aus der Gruppe bestehend aus Haut, Haaren, Zähnen, Arbeitsflächen, Waschbecken, Wannen, Armaturen, Toilettenschüsseln und Kombinationen davon.

## Revendications

1. Procédé pour fabriquer une structure stratifiée comprenant :
a) la fourniture d'une première couche (1) comprenant un substrat
b) le formage d'une couche intermédiaire (5) sur ladite première couche (1) et
c) l'application d'une deuxième couche (2) sur ladite couche intermédiaire (5) de façon à former une structure multicouche ;
la liaison de ladite structure multicouche pour produire une structure stratifiée comprenant la première couche liée à la deuxième couche avec la couche intermédiaire disposée entre elles, dans lequel au moins l'une parmi les première et deuxième couches est perméable aux liquides ;
**caractérisé en ce que** ladite couche intermédiaire comprend une composition effervescente (6) et un agent de liaison (7), ledit agent de liaison étant présent en une quantité comprise entre 5 et 30 % en poids de la composition effervescente.

2. Procédé selon la revendication 1, dans lequel la composition effervescente (6) a un pH allant de 2,5 à 9,0, de préférence la composition effervescente comprend de 1 à 80 % d'un matériau alcalin et de 0,5 % à 80 % d'un matériau acide sur base du poids total de la composition effervescente, plus préférablement dans lequel le rapport dudit matériau acide sur ledit matériau alcalin va de 20:70 à 70:20.

3. Procédé selon l'une quelconque des revendications précédentes, dans lequel la composition effervescente (6) comprend des matériaux alcalins et acides solides, de préférence le matériau alcalin est choisi dans le groupe constitué de sels anhydres de carbonates et bicarbonates ; peroxydes et azothydrures alcalins et leurs mélanges, plus préférablement le matériau alcalin est choisi dans le groupe constitué du bicarbonate de sodium, bicarbonate de potassium, carbonate de sodium, carbonate de potassium et leurs mélanges, encore plus préférablement le matériau acide est choisi dans le groupe constitué d'acides mono- et poly-carboxyliques organiques en C₂ à C₂₀ ; acides organophosphorés en C₂ à C₂₀ ; acides organosulfurés en C₂ à C₂₀, acide toluènesulfonique : peroxydes, lactones et leurs mélanges, et même encore plus préférablement le matériau acide est choisi dans le groupe constitué des acides adipique, glutarique, succinique, tartrique, malique, maléique, lactique, salicylique, citrique et leurs mélanges.

4. Procédé selon l'une quelconque des revendications précédentes, dans lequel ledit matériau alcalin a une taille des particules totale de moins de 500 mesh.

5. Procédé selon l'une quelconque des revendications précédentes, dans lequel ledit matériau acide a une taille des particules totale de moins de 300 mesh.

6. Procédé selon la revendication 1, dans lequel ladite structure stratifiée comprend facultativement un agent tensioactif pulvérulent.

7. Procédé selon la revendication 6, dans lequel ladite structure génère un volume moyen de moussage supérieur ou égal à 25 mL.

8. Procédé selon la revendication 1, dans lequel les première (1) et deuxième (2) couches s'étendent au-delà de la couche intermédiaire (5) en formant latéralement des parties de bord longitudinal (8, 8') et le procédé comprend en outre l'étape consistant à (d) appliquer des lignes longitudinales (10) de matériau adhésif aux parties de bord longitudinal (8, 8') de la première couche et à lier ensemble les première et deuxième couches le long de chacune des parties de bord.

9. Procédé selon la revendication 1, dans lequel les première (1) et deuxième (2) couches sont identiques ou différentes et chacune des première et deuxième couches comprend indépendamment un matériau choisi dans le groupe constitué de tissu tissé, nontissé, film synthétique, papier absorbant et leurs combinaisons ; et dans lequel le matériau a une masse surfacique comprise entre 1 g/m² et 150 g/m².

10. Procédé selon les revendications 1 et 8, dans lequel la couche intermédiaire (5) est formée sur la première couche à un grammage allant de 50 g/m² à 600 g/m², de préférence dans lequel la couche intermédiaire est formée sur la première couche à un grammage allant de 300 g/m² à 500 g/m².

11. Procédé selon la revendication 1, dans lequel l'agent de liaison (7) est choisi dans le groupe constitué de polypropylène, polyéthylène, éthylène-acétate de vinyle et leurs mélanges, de préférence dans lequel l'agent de liaison est présent en une quantité de 10 g/m² à 120 g/m², plus préférablement dans lequel l'agent de liaison a un indice d'écoulement en fusion (M.F.I.) d'au moins 25 g/10 min.

12. Procédé selon la revendication 1, 8 et 10, dans lequel la couche intermédiaire (5) est formée en déposant un mélange de la composition effervescente (6) et de l'agent de liaison (7) sur la première couche (1).

13. Procédé selon les revendications 1, 8 et 10, dans lequel la couche intermédiaire (5) est formée en déposant séparément la composition effervescente (6) et de l'agent de liaison (7) sur la première couche (1).

14. Procédé selon la revendication 8, où ledit procédé comprend en outre :
e.) un refendage longitudinal de ladite structure stratifiée pour produire des nappes étroites ; et
f.) un enroulement des nappes étroites dans des rouleaux (11).

15. Article stratifié comprenant une structure stratifiée, **caractérisé en ce qu'**il est produit conformément au procédé selon la revendication 1, de préférence sous la forme d'un article pour nettoyer des surfaces dans lequel les surfaces sont choisies dans le groupe constitué de la peau, les cheveux, les dents, des plans de travail, des éviers, des cuves, des accessoires, des cuvettes de toilette, et leurs combinaisons.
